Europäisches Patentamt

European Patent Office

Office européen des brevets

(19)

(11) Publication number: **0 555 482 A1**

## EUROPEAN PATENT APPLICATION
### published in accordance with Art. 158(3) EPC

(12)

(21) Application number: 91918595.9

(22) Date of filing: **28.10.91**

(86) International application number:
**PCT/JP91/01467**

(87) International publication number:
**WO 92/08191 (14.05.92 92/11)**

(51) Int. Cl.⁵: **G06F 9/44**, G05B 13/02

(30) Priority: **29.10.90 JP 293056/90**

(43) Date of publication of application:
**18.08.93 Bulletin 93/33**

(84) Designated Contracting States:
**DE FR GB IT**

(71) Applicant: **OMRON CORPORATION**
**10, Tsuchido-cho Hanazono Ukyo-ku**
**Kyoto 616(JP)**

(72) Inventor: **TSUCHIYA, Nobuo, Omron**
**Corporation**
**Intellectual Property Center 20, Igadera**
**Shimokaiinji Nagaokakyo-shi Kyoto 617(JP)**

(74) Representative: **Wilhelms, Rolf E., Dr.**
**WILHELMS, KILIAN & PARTNER**
**Patentanwälte Eduard-Schmid-Strasse 2**
**D-81541 München (DE)**

(54) DEVICE FOR PERFORMING FUZZY INFERENCE AND METHOD FOR MONITORING OPERATION THEREOF.

(57) When input values (input variables $x_1$, $x_2$, ..., $x_n$) fed to a fuzzy inference engine (1) belong in the definition range of inference rules set in the fuzzy inference engine (1), the computations of the fuzzy inference are performed correctly, and the output values (y) obtained as the result thereof are outputted via a selector (6). When the input values are outside the definition range of the inference rules owing to errors of setting the inference rules, etc., the goodnesses of fit in the antecedents of all the rules are zero, and the computations of the fuzzy inference are impossible. The times of the occurrences of such states that the inference computations are impossible are counted by a counter (3). When the continuously counted time exceeds predetermined one (c), a specified output value ($y_s$) set in a memory (4) beforehand is outputted from the selector (6).

Fig.I

## Technical Field

This invention relates to a fuzzy reasoning apparatus to which a plurality of fuzzy reasoning rules in which propositions relating to input variables serve as an antecedent and a proposition relating to an output variable serves as a consequent is beforehand set, wherein a fuzzy reasoning operation for performing fuzzy reasoning by applying given input values relating to the input variables to the above-mentioned fuzzy reasoning rules and for producing an output value relating to an output variable obtained by this fuzzy reasoning is repeatedly executed.

## Background Art

A fuzzy reasoning rule set in a fuzzy reasoning apparatus often is created based upon knowledge obtained from experimentation or experience.

A fuzzy reasoning rule is expressed in the following "If, then" format:

(Rule 1)

If $x_1$ = PL, $x_2$ = NL, ⋯, and $x_n$ = ZR then $y$ = PL

"If ⋯ $x_n$ = ZR" is referred to as an "antecedent", and "then $y$ = PL" is referred to as a "consequent".

Further, $x_1$, $x_2$, ⋯, $x_n$ are input variables, and $y$ is an output variable. PL, NL, ZR, etc., represent labels (linguistic information). Seven types of labels are often used, and the meanings thereof are as follows:

NL: negative large
NM: negative medium
NS: negative small
ZR: almost zero
PS: positive small
PM: positive medium
PL: positive large

In general, a plurality of fuzzy reasoning rules of the kind mentioned above are created.

Though there are various methods of performing a fuzzy reasoning operation, the most common is performed in accordance with a MIN-MAX rule and is executed in the following manner:

When input values regarding input variables $x_1$ ~ $x_n$ are given, the memberships of these values in corresponding membership functions are obtained. For example, in the proposition $x_1$ = PL regarding the input variable $x_1$ of Rule 1, the functional value (let this be represented by $a_1$PL) of the membership function PL that prevails when the input value $x_1$ is applied (where it is assumed that $x_1$ is used also as the notation of the input value) is the membership. Memberships are similarly obtained with regard also to the other propositions $x_2$ = NL, $x_n$ = ZR, etc., of the antecedent (let these memberships be represented by $a_2$NL, $a_n$ZR, etc.).

The minimum value MIN ($a_{1PL}$, $a_{2NL}$, ⋯, $a_{nZR}$) of the memberships $a_{1PL}$, $a_{2NL}$, ⋯, $a_{nZR}$ regarding the membership functions thus obtained are found. The minimum value is referred to as the membership of the antecedent. Let the membership of the antecedent of Rule 1 be represented by $a_{MIN1}$.

Antecedent memberships regarding other rules are found in the same manner.

Next, by using the antecedent membership obtained, truncation processing of membership functions of the corresponding consequent is performed. For example, in Rule 1, the membership function PL of the consequent is truncated using the membership $a_{MIN1}$ of the antecedent. Truncation is carried out in all rules.

A MAX operation of all consequent membership functions thus truncated is performed. The result of the MAX operation represents the result of fuzzy reasoning.

In a case where a device is subjected to control or the like by means of a fuzzy reasoning operation, the result of the maximum operation is defuzzified (i.e., subjected to the reverse of fuzzification). Though there are many defuzzifying methods, the center-of-gravity method is the most common. The position of the center of gravity of the result of the MAX operation is the defuzzified final result of fuzzy reasoning.

In a case where there are a large number of the input variables $x_1$ ~ $x_n$, the number of fuzzy reasoning rules to be set is enormous and the setting operation is a troublesome one. Further, in a case where a fuzzy reasoning apparatus is composed of analog circuitry, the circuit configuration is complicated. Accordingly, a practice employed in the prior art is to omit the setting of fuzzy reasoning rules regarding combinations of input variables having a low frequency of appearance. Furthermore, owing to errors in the operation for setting the fuzzy reasoning rules, there are not a few instances in which the necessary fuzzy reasoning rules are left unset.

If there is an area in which fuzzy reasoning rules thus have not been set (defined) in a combination of input variables, a fuzzy inferential result will not be obtained from the fuzzy reasoning apparatus when an input value belonging to this area happens to be applied to the fuzzy reasoning apparatus. The reason for this is that the aforementioned antecedent membership becomes zero in all of the rules.

In such cases, there is the danger that an accident such as erroneous operation of or damage to the device under control will occur.

The present invention seeks to provide a fuzzy reasoning apparatus and method in which, even if there is an area wherein a fuzzy reasoning rule is not defined and an input value belonging to this area is applied, a pseudo-fuzzy inferential output is generated and applied to the controlled device so that the occurrence of an accident such as erroneous operation of the controlled device or damage thereto can be prevented in advance.

A another object of the present invention is to make it possible to readily discover an area not covered by a fuzzy reasoning rule.

Disclosure of the Invention

The present invention provides a fuzzy reasoning apparatus having fuzzy reasoning means, to which a plurality of fuzzy reasoning rules in which propositions relating to input variables serve as an antecedent and a proposition relating to an output variable serves as a consequent is beforehand set, for repeatedly performing a fuzzy reasoning operation in which fuzzy reasoning is executed by applying given input values relating to the input variables to the fuzzy reasoning rules and an output value relating to an output variable obtained by this fuzzy reasoning is outputted, the apparatus comprising means for sensing that a given input value is outside a range covered by the plurality of fuzzy reasoning rules, successive-incidence counting means for counting the number of successive incidences in which the input value is sensed by said sensing means to be outside the range covered by the fuzzy reasoning rules, memory means for storing a specified output value set in advance, and selective output means for outputting the specified output value, which has been stored in the memory means, instead of the output value of the fuzzy reasoning means when the number counted by the successive-incidence counting means attains a predetermined prescribed count.

By further providing means for entering the specified output value, setting and changing of the specified output value are facilitated.

Setting and changing of the prescribed count are facilitated by providing input means for entering the prescribed count and memory means for storing the prescribed count entered.

A range covered by the plurality of fuzzy reasoning rules is the same as a range in which the fuzzy reasoning rules have been defined or set. Whether or not a given input value is outside the range covered by the set plurality of fuzzy reasoning rules is determined based upon whether the values of all antecedent memberships of the plurality of fuzzy reasoning rules are zero or not.

In accordance with the present invention, the preset specified output value is outputted even if a given input value is outside an area covered by fuzzy reasoning rules and fuzzy reasoning has become substantially impossible. As a result, control of the controlled device can continue using this specified output value. This makes it possible to prevent erroneous operation of the controlled device or mechanical damage thereto.

The specified input value is set at an appropriate value in conformity with the characteristics or conditions of use of the device controlled by the fuzzy reasoning apparatus or the system using the fuzzy reasoning apparatus. The same applies for the prescribed count mentioned above.

In a preferred embodiment of the present invention, the fuzzy reasoning apparatus has means for storing an immediately preceding output value obtained by the fuzzy reasoning means. When the sensing means has sensed that the given input value is outside the range, the selective output means selectively outputs the immediately preceding value, which has been stored in the storing means, until the number counted by the successive-incidence counting means attains the prescribed count.

As a result of this expedient, some output is obtained from the fuzzy reasoning apparatus even while the successive-incidence counting means is performing the counting operation. This means that it is possible to avoid the occurrence of a situation in which control is interrupted.

In another preferred embodiment of the present invention, the fuzzy reasoning apparatus further comprises means for storing an immediately preceding output value obtained by the fuzzy reasoning means, and means for calculating a transient output value, which makes a gradual transition from the immediately preceding output value to the specified output value, whenever the sensing means has sensed that the given input value is outside the range, the transient output value being calculated using a difference between the specified output value and the immediately preceding output value, which has been stored in the storing means, and the number counted by the successive-incidence counting means. When the sensing means has sensed that the given input value is outside the range, the selective output means selectively outputs the transient output value until the number counted by the successive-incidence counting means attains the prescribed count.

In this embodiment, the output value of the fuzzy reasoning apparatus finally becomes the specified output value while undergoing a gradual change, and therefore smooth control of the controlled device is made possible. In addition, since there is no sudden change in the output value, an accident such as damage to the device stemming from a sudden change in the output value can be prevented.

In a further embodiment of the invention, the fuzzy reasoning apparatus further comprises means for alerting of the fact that the specified output value is being outputted when the number counted by the successive-incidence counting means has attained the prescribed count.

As a result of this expedient, the user of the fuzzy reasoning apparatus is capable of ascertaining that there is a portion in which a fuzzy reasoning rule is missing and therefore that the specified output value is currently being delivered.

Furthermore, in this embodiment of the invention, the fuzzy reasoning apparatus further comprises means for storing an input value that prevails when the sensing means has sensed that the given input value is outside the range or when the number counted by the successive-incidence counting means has attained the prescribed count.

Since the input value in an area in which a fuzzy reasoning rule is missing is stored in the storing means, an area for which a rule is to be added and set can be ascertained, thereby facilitating the addition or revision of a rule.

The present invention provides a method of monitoring the operation of a fuzzy reasoning apparatus to which a plurality of fuzzy reasoning rules in which propositions relating to input variables serve as an antecedent and a proposition relating to an output variable serves as a consequent is beforehand set, wherein a fuzzy reasoning operation for performing fuzzy reasoning by applying given input values relating to the input variables to the fuzzy reasoning rules and for producing an output value relating to an output variable obtained by this fuzzy reasoning is repeatedly executed, the method comprising determining, for every fuzzy reasoning operation, whether a reasoning-disabled state, in which antecedent membership is zero in all fuzzy reasoning rules, prevails when given input values are applied to the plurality of fuzzy reasoning rules, counting the number of successive appearances of the reasoning-disabled state when this state is determined to exist, and outputting a predetermined specified output value as the output of the fuzzy reasoning apparatus when the number of successive appearances of the reasoning-disabled state has attained a predetermined prescribed count.

In accordance with the present invention, an appropriate specified output value conforming to the characteristics or conditions of use of the system employing the fuzzy reasoning apparatus can be delivered even when an input value is given that belongs to an area in which fuzzy reasoning is impossible owing to omission of a fuzzy reasoning rule. Accordingly, it is possible for the operation of the fuzzy reasoning apparatus to continue. As a result, accidents such as erroneous operation of the controlled device or damage thereto can be prevented in advance.

In order to continue the output from the fuzzy reasoning apparatus until the number of successive appearances of the reasoning-disabled state has attained the predetermined prescribed count, an embodiment of this embodiment includes storing an immediately preceding output value, which has been obtained from the fuzzy reasoning apparatus, in a memory beforehand, and, when the reasoning-disabled state has been determined to exist, selectively outputting the immediately preceding output value, which has been stored in the memory, until the number of successive appearances of the reasoning-disabled state has attained the prescribed count.

In another preferred embodiment, the method includes storing an immediately preceding output value, which has been obtained from the fuzzy reasoning apparatus, in a memory beforehand, and, when the reasoning-disabled state has been determined to exist, calculating a transient output value, which makes a gradual transition from the immediately preceding output value to the specified output value, in dependence upon the number of successive appearances of the reasoning-disabled state at this timer and selectively outputting the transient output value until the number of successive appearances of the reasoning-disabled state attains the prescribed count.

Further, in a preferred embodiment of the invention, the method includes alerting of the fact that the specified output value is being outputted when the number of successive appearances of the reasoning-disabled state has attained the prescribed count.

Preferably, an input value that prevails when the reasoning-disabled state has been determined to exist or when the number of successive appearances of the reasoning-disabled state has attained the prescribed count is stored in memory.

The present invention further provides an operation monitoring method whereby it is possible to check whether a reasoning rule has been set in a fuzzy reasoning apparatus appropriately.

In accordance with the present invention, there is provided a method of monitoring the operation of a fuzzy reasoning apparatus to which a plurality of fuzzy reasoning rules in which propositions relating to input variables serve as an antecedent and a proposition relating to an output variable serves as a consequent is beforehand set, wherein a fuzzy reasoning operation for performing fuzzy reasoning by applying given input values relating to the input variables to the fuzzy reasoning rules and for producing an output value relating to an output variable obtained by this fuzzy reasoning is repeatedly executed, the method comprising determining, for every fuzzy reasoning operation, whether a reasoning-disabled state, in which antecedent membership is zero in all fuzzy reasoning rules, prevails when given input values are applied to the plurality of fuzzy reasoning rules, counting the number of successive appearances of the reasoning-disabled state when this state is determined to exist, and alerting of the fact that the number of successive appearances of the reasoning-disabled state has attained a predetermined prescribed count when this has occurred.

The fact that a reasoning-disabled state, in which antecedent membership is zero in all fuzzy reasoning rules when given input values are applied to the fuzzy reasoning rules, occurs successively a prescribed number of times means that fairly important rules have been omitted. In accordance with the present invention, the fuzzy reasoning apparatus is operated experimentally so that it is possible to ascertain whether the rules have been set appropriately over the full range of possible input values.

Preferably, an input value that prevails when the reasoning-disabled state has been determined to exist or when the number of successive appearances of the reasoning-disabled state has attained the prescribed count is stored in memory. By virtue of this expedient, it is possible to ascertain the range of input values for which a rule has been omitted.

Brief Description of the Drawings

Fig. 1, which illustrates an embodiment of the present invention, is a block diagram showing the configuration of a fuzzy reasoning apparatus;
Fig. 2 is a memory map showing data stored in a memory;
Fig. 3 is a flowchart illustrating a procedure for entering a specified output value and a set count value;
Fig. 4 is a flowchart illustrating the operation of the fuzzy reasoning apparatus;
Fig. 5, which illustrates an example of application of the fuzzy reasoning apparatus, is a block diagram showing the servomechanism of a motor;
Figs. 6a and 6b illustrate another example of an application of the fuzzy reasoning apparatus, in which Fig. 6a is a block diagram and Fig. 6b a graph showing the range of input data;
Figs. 7 and 8 illustrate another embodiment, in which Fig. 7 is a block diagram of a fuzzy reasoning apparatus and Fig. 8 a memory map;
Figs. 9 and 10 illustrate yet another embodiment, in which Fig. 9 is a block diagram of a fuzzy reasoning apparatus and Fig. 10 is a memory map showing a data area for input-value historical data; and
Fig. 11 is a graph, which illustrates a further embodiment, showing the manner in which an output value varies in step-like fashion in a transient period.

Best Mode for Carrying Out the Invention

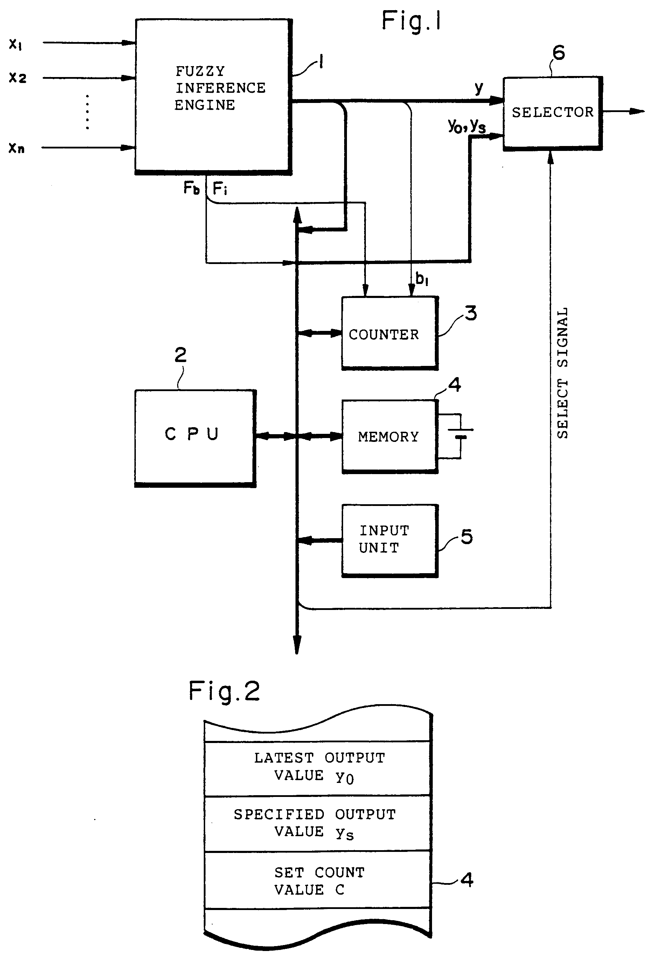

Fig. 1 is a block diagram illustrating the electrical configuration of a fuzzy reasoning apparatus according to the present invention.

A fuzzy inference engine 1 is preset to a fuzzy reasoning rule such as Rule 1 described above. In general, a plurality of fuzzy reasoning rules are set. Input values relating to input variables $x_1$, $x_2$, $\cdots$, $x_n$ are applied to the fuzzy inference engine 1. The latter applies the given input values to all of the fuzzy reasoning rules that have been set, executes a fuzzy reasoning operation in accordance with the above-described MIN-MAX rule and outputs the final defuzzified inferential result as an output value y. The output value y usually is applied to the controlled object (not shown) via a selector 6 so as to be used in control of the object.

The fuzzy inference engine 1 delivers the output value y as digital data. The output data y comprises a suitable number of bits (e.g., eight bits) of which the most significant bit (or least significant bit) represents whether fuzzy reasoning is capable of being executed or not. The fact that fuzzy reasoning cannot be executed means that the set fuzzy reasoning rules do not cover the area of given input values, as a result of which the memberships of the antecedents of all the rules are zero. In a case where execution is impossible, the fuzzy inference engine 1 delivers output data y in which "1" has been set at the bit $b_1$. In other cases, namely when execution is possible, $b_1$ = "0" is set. The bit $b_1$ is applied to a counter 3.

The fuzzy inference engine 1 outputs flag signals $F_b$, $F_i$ representing the state of operation. The flag signal $F_b$ is outputted when the fuzzy inference engine 1 is executing a fuzzy reasoning operation. The flag $F_i$ is outputted when the fuzzy reasoning operation ends. The flag $F_i$ also is applied to the counter 3.

The fuzzy inference engine 1 executes the above-described reasoning operation repeatedly at a fixed period. The reasoning period is determined by the precision of control required by the controlled object and by the capability of the fuzzy inference engine 1. The fuzzy inference engine 1 naturally may execute the fuzzy reasoning operation at irregular intervals when an input value is changed, when so required by the controlled object or when a command is provided by a CPU 2, described below. In any case, the fuzzy inference engine 1 executes the fuzzy reasoning operation repeatedly, whether periodically or at irregular intervals.

The fuzzy inference engine 1 is connected to the CPU 2 by a bus. In principle, the fuzzy inference engine 1 executes the fuzzy reasoning operation independently of the CPU 2. The flags $F_b$, $F_i$ outputted by the fuzzy inference engine 1 are applied to the CPU 2 via the bus. As a result, the CPU 2 is capable of sensing the operating state of the inference engine 1. The output data y produced by the inference engine 1 also is applied to the CPU 2 via the bus.

The counter 3, a memory 4 and an input unit 5 are connected to the CPU 2 via the bus.

The object program of the CPU 2 is stored in the memory 4. As shown in Fig. 2, the memory 4 is further provided with an area for storing the latest output value $y_0$ delivered by the fuzzy inference engine 1, an area for storing a specified output value $y_s$ outputted instead of the output value y, and an area for storing a set count value C for the counter 3.

The input unit 5 comprises a keyboard or other input device and is used in order to enter the above-mentioned specified output value $y_s$ and set count value C.

While it is being provided with the flag signal $F_i$ indicating that fuzzy reasoning has ended, the counter 3 counts the bit $b_1$, which is part of the output data y, if this bit is "1". The counter 3 is cleared by the CPU 2.

The selector 6, which is controlled by a select signal provided by the CPU 2, selects and delivers the output value y outputted by the fuzzy inference engine 1, the specified output value $y_s$ provided by the CPU 2, or the latest output value $y_0$.

The basic operation of the fuzzy inference engine 1 is as follows:

The fuzzy inference engine 1 executes a reasoning operation in accordance with fuzzy reasoning rules using input values applied thereto. As long as this reasoning operation is capable of being executed, the selector 6 selects and outputs the output value y from the fuzzy inference engine 1. The output value y is stored in the memory 4 as the latest output value $y_0$. The latest output value $y_0$ stored in the memory 4 is updated each time fuzzy reasoning is executed (only when reasoning is capable of being executed) so that the most recent output value $y_0$ is always stored in the memory 4. Furthermore, the counter 3 is cleared.

If the input values to the fuzzy inference engine 1 are outside a range covered by the rules set in the fuzzy inference engine 1 and, hence, the bit $b_1$ of the output data y delivered by the fuzzy inference engine 1 is "1" (the other bits of the output data y would all be "0"), the count value in the counter 3 is incremented by one count. If the execution-disabled state of the fuzzy inference engine 1 continues for a number of times (the number of times fuzzy reasoning is repeated) equal to the set count value C, the count value in the counter 3 becomes this value C. In this case, the specified output value $y_s$ is read out of the memory 4 and applied to the selector 6. The latter selects and delivers the specified output value $y_s$.

In the period of time from the moment at which the fuzzy inference engine 1 first attains the execution-disabled state to the moment at which this state has continued C times, the latest output value $y_0$ that has been stored in the memory 4 is delivered via the selector 6.

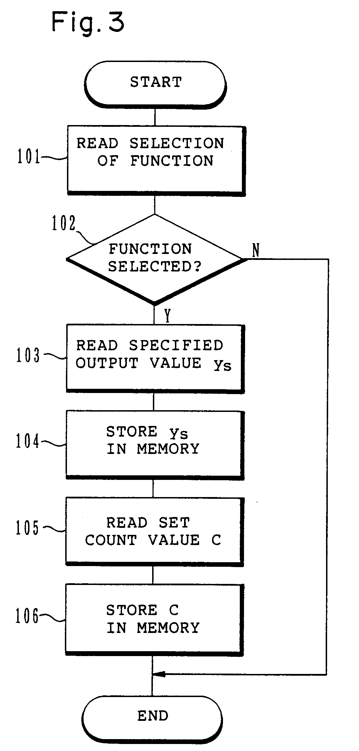

Fig. 3 illustrates a processing procedure for setting the above-mentioned specified output value $y_s$ and set count value C. This processing is executed mainly by the CPU 2.

The specified output value $y_s$ is a value to be delivered as the output value when the state in which fuzzy reasoning is impossible has continued for the prescribed number of times, and the set count value C represents this prescribed number of times. These values $y_s$, C are capable of being set at will by the user of the fuzzy inference apparatus. The times at which these settings are made also is arbitrary. Preferably, setting should be possible even while the fuzzy inference engine 1 is operating. The user should set the values ys, C in conformity with such factors as the nature, state of use and environment of the controlled object.

First, the user employs the input unit 5 to enter whether or not to utilize the function of this invention, namely the delivery of the specified output value $y_s$ when the state in which execution of fuzzy reasoning is impossible has continues for the prescribed number of times. If this function is not utilized, the user need not perform any operation.

Whether or not the above-mentioned function has been selected at the input unit 5 is read. If the function has been selected, then the program proceeds to the next operation (steps 101 , 102).

Since the user enters the specified output value $y_s$ and set count value C at the input unit 5, these values are read successively and each is stored in the memory 4 (steps 103, 104, 105, 106).

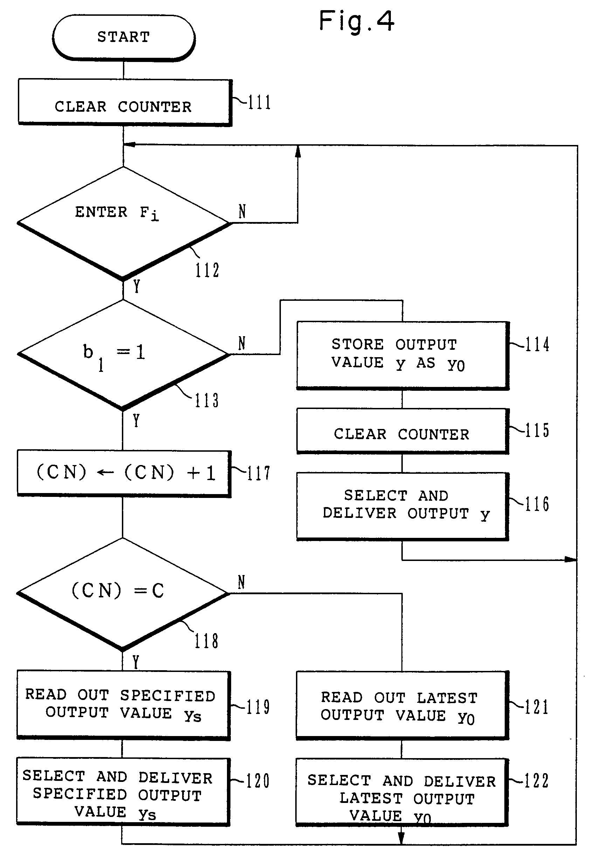

Fig. 4 illustrates the operation of the fuzzy reasoning apparatus. This is executed mainly by the CPU 2.

The counter 3 is cleared by the CPU 2 as initial processing (step 111).

When the flag $F_i$, which indicates the conclusion of the first fuzzy reasoning operation in the fuzzy inference engine 1, is delivered (step 112), the CPU 2 reads in the output data y from the fuzzy inference engine 1 and checks the status of the bit $b_1$ (step 113).

If $b_1 = 0$ holds, this means that input values contained within an area defined by the fuzzy reasoning rules set in the fuzzy inference engine 1 have been applied, and that fuzzy reasoning has been executed using these rules. The output data y is stored in the memory 4 as the latest output value $y_0$ by the CPU 2 (step 114) and the counter 3 is cleared (step 115). Further, the output data y is selected and delivered by the selector 6 under the control of the CPU 2 (step 116). The output data y is applied to the controlled object.

If b = "1" holds, this means that the input values do not fall in an area defined by the fuzzy reasoning rules and therefore the antecedent memberships of all the rules is zero, as a result of which fuzzy reasoning is not being executed. In this case, the count value (CN) in the counter 3 is made +1 (incremented) (step 117) . As set forth above, the processing of step 117 is executed by hardware, based upon the signals $F_i$, $b_i$ applied to the counter 3, without the intervention of the CPU 2. It is of course permissible to adopt an arrangement in which the CPU 2 applies an incrementing pulse to the counter 2.

Whether the count value (CN) in the counter 3 has attained the set count value C stored in the memory 4 is checked by the CPU 2 (step 118). If the set count value C has been reached, then the reasoning disabled-state has continued for C times. Consequently, the specified output value $y_s$ set beforehand in the memory 4 is read out by the CPU 2 (step 119) and the specified value $y_s$ is applied to the controlled object through the selector 6 (step 120). The selector 6 is controlled by the CPU 2 so as to select the specified output value $y_s$.

If the count value (CN) in the counter 3 has not attained by set count value C, then the latest output value $y_0$ stored in the memory 4 is read out by the CPU 2 (step 121). The latest output value $y_0$ is applied to the controlled object through the selector 6 (step 122). The selector 6 is controlled by the CPU 2 so as to select the latest output value $y_0$.

The above-described operation is executed repeatedly each time the fuzzy inference engine 1 outputs the signal $F_i$ indicative of the conclusion of reasoning.

Thus, when input values within a range covered by the fuzzy reasoning rules are given, the output value y obtained by the fuzzy reasoning operation is delivered. When input values outside a range covered by the fuzzy reasoning rules are given, fuzzy reasoning is impossible. The latest fuzzy reasoning output value $y_0$ is delivered in the transient period which lasts up to the moment this state is found to continue for the prescribed number of times C. When this state has continued for the prescribed number of times C, the predeter-

mined specified output value $y_s$ is delivered.

Depending upon the nature of the controlled object, there are situations in which no problems arise even if the output representing the result of fuzzy reasoning (this output often is the manipulated variable of the controlled object) is not applied to the object, providing this is for a comparatively short period of time. The above-mentioned transient output value $y_0$ need not be delivered to such a controlled object.

In a case where the fuzzy inference engine 1 is so adapted as to deliver an appropriate fixed value as the output value when the memberships of all rules are zero, an arrangement may be adopted in which the selector 6 is controlled in such a manner that the fixed value outputted by the fuzzy inference engine 1 is selected and outputted in the transient period which lasts up to the moment fuzzy reasoning disabled-state is found to continue for the prescribed number of times C.

It can be arranged so that part or all of the processing shown in Fig. 4 is implemented by hardware. For example, it is possible for the processing of steps 114 ~ 116 to be implemented by a register for temporarily storing the output value y in response to signals $F_i$, $b_i$ at logical "0", a logic circuit for clearing the counter 3 in response to signals $F_i$, $b_i$ at logical "0", and a circuit for controlling the selector 6 so as to select the output value y in response to signals $F_i$, $b_i$ at logical "0". The processing of the other steps also may be implemented by hardware or firmware in similar fashion. In such case, an arrangement can be adopted in which the set count value C is preset in the counter 3 instead of the counter 3 being cleared, and the counter is decremented each time the bit $b_1$ at "1" is applied thereto. Alternatively, a comparison circuit for comparing the set count value C and the count value (CN) of the counter 3 may be provided.

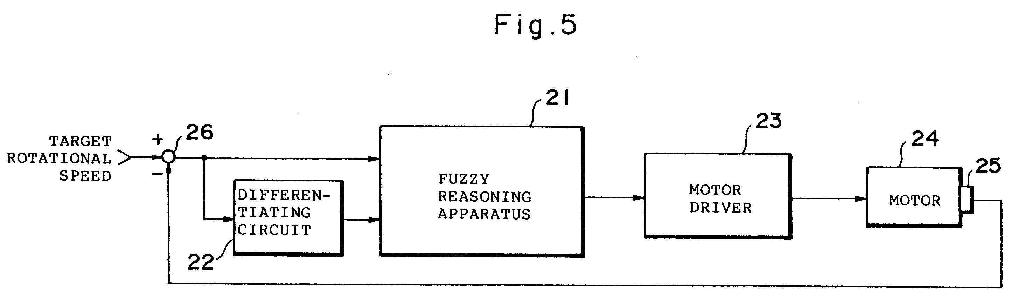

Fig. 5 illustrates an example in which the fuzzy reasoning apparatus is applied to the servomechanism of a motor.

The motor 24 is driven by a motor driver 23. The rotational speed of the motor 24 is detected by an encoder 25, and the difference between a target rotational speed and the detected rotational speed is calculated by a subtracting circuit 26. The amount of change in the difference in rotational speed is calculated by a differentiating circuit 22. The difference in rotational speed and the amount of change in this speed are applied to a fuzzy reasoning apparatus 21. The latter executes a fuzzy reasoning operation in accordance with the preset rules, outputs a current command value or a voltage command value for controlling the motor 24 in such a manner that the rotational speed of the motor 24 will approach the target rotational speed, and applies this command value to the motor driver 23.

By setting 0 as the specified output value $y_s$ in advance, drive of the motor 24 can be halted to preclude mechanical damage when the rotational speed of the motor 24 enters an area in which fuzzy reasoning rules have not been set. Further, by setting an appropriate value as the set count value C, the latest command value is maintained during the execution of reasoning the set number of times C so that return of the rotational speed of the motor 24 to the area for which fuzzy reasoning rules have been set may be expected to occur during this period. This furnishes a fixed grace period until it is judged that an abnormality has occurred.

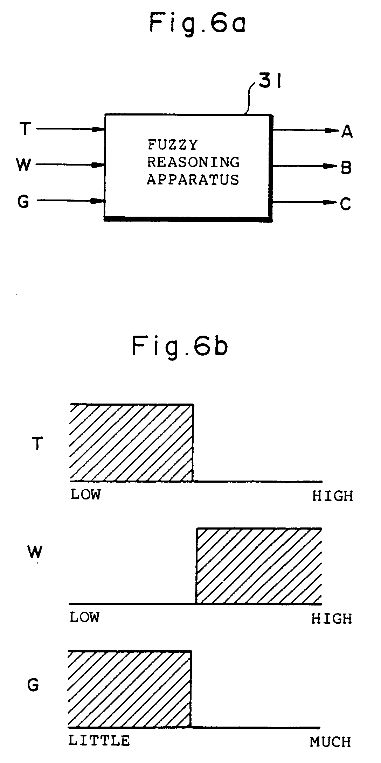

Figs. 6a and 6b illustrate an example of another application. In Fig. 6a, a fuzzy reasoning apparatus 31 executes fuzzy reasoning for deciding the mixing ratio of each of medicines A, B, C upon being provided with temperature T, humidity W and production G as input variables.

It will be assumed that the mixing ratio should be fixed if the temperature T is higher than a fixed value, the humidity W is less than a fixed value and the production G is greater than a fixed value. In this case, fuzzy reasoning rules need not be created in advance with regard to areas outside the areas indicated by the hatching in Fig. 6b. The specified output value $y_s$ is set beforehand as the fixed mixing ratio with regard to these areas. Fuzzy reasoning rules may thus be curtailed to facilitate the setting operation.

An arrangement may be adopted in which a value to be outputted in the transition period, which lasts from the moment the fuzzy inference engine becomes incapable of reasoning to the moment this state is found to continue the prescribed number of times C, can be entered from the input unit 5 in advance and set in the memory 4.

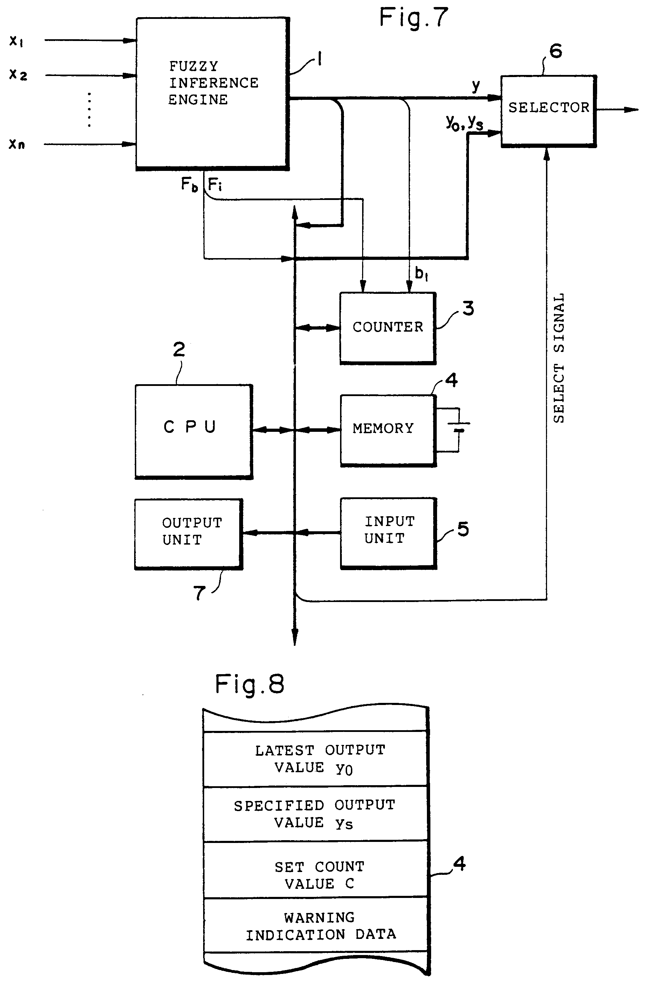

Figs. 7 and 8 illustrate another embodiment. Components in these Figures that are the same as those illustrated in Figs. 1 and 2 are designated by like characters and a description thereof is avoided in order to avoid prolixity.

An output unit 7 is provided in Fig. 7 and is connected to the CPU 2 by a bus. The output unit 7 is constituted by a display unit or printer.

In Fig. 8, data (warning display data) representing subject matter (a message) to be displayed (or to be printed) by the output unit 7 is stored beforehand in a prescribed area of the memory 4. When the reasoning-disabled state, in which the input values fall within a range incapable of being covered by the fuzzy reasoning rules in the fuzzy inference engine 1, has continued for the prescribed number of times C, the warning display data provides an alert indication indicative of this event. This can be entered from the input units.

Thus, when the fuzzy inference engine 1 is incapable of reasoning the prescribed number of times C in succession, this fact is indicated by the output unit 7. As a result, the user is capable of ascertaining that the specified output value $y_s$ is being outputted.

This warning indication may be presented when the reasoning-disabled state has occurred in the fuzzy inference engine 1 even one time, and the number of times this state has occurred can be indicated as well.

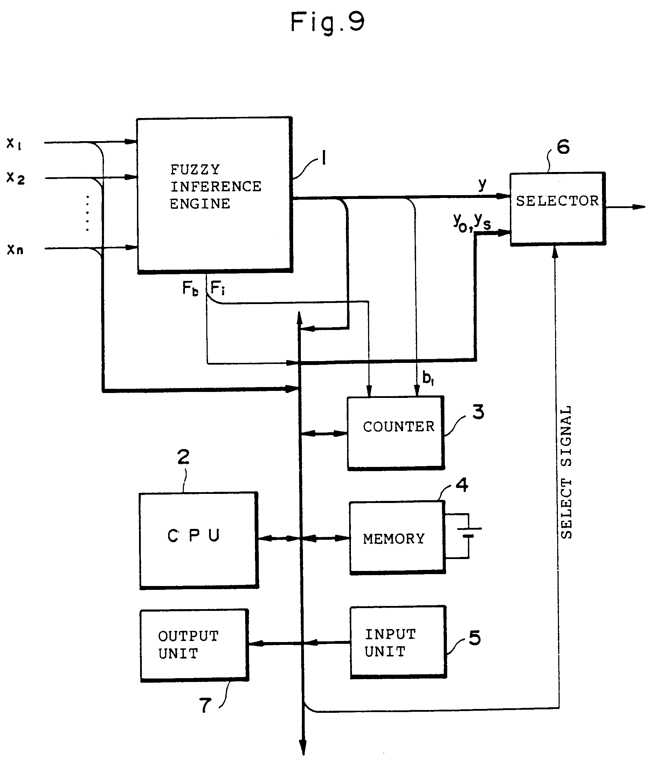

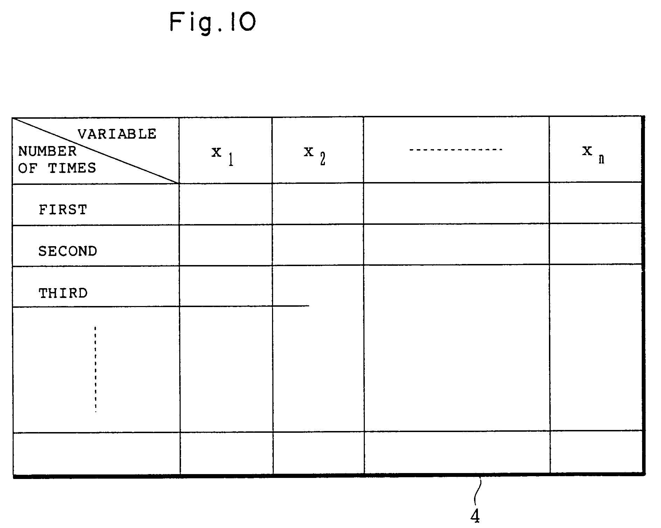

Figs. 9 and 10 illustrate another embodiment. Components in Fig. 9 that are the same as those illustrated in Figs. 1 or 7 are designated by like characters and a description thereof is avoided in order to avoid prolixity.

In Fig. 9, input lines for the input values of input variables $x_1 \sim x_n$ applied to the fuzzy inference engine 1 are connected to the bus of the CPU 2. The memory 4 is provided with a data area for input-value historical data of the kind shown in Fig. 10.

When the fuzzy inference engine 1 becomes incapable of performing reasoning and the bit $b_1$ of the output data y becomes "1", the CPU 2 reads in the presently prevailing input values (the values of input variables $x_1 \sim x_n$) through the bus and stores these values in the data area for input-value historical data in the memory 4. The input-value historical data is stored in the memory 4 each time the fuzzy inference engine 1 becomes incapable of reasoning.

The user is capable of applying a read command from the input unit 5. In response to this read command, the CPU 2 reads out the input-value data that has been stored in the data area of memory 4 for the input-value historical data and delivers (by display or printing) this data from the output unit 7. While observing the output data, the user can ascertain the range of input values not covered by the fuzzy reasoning rules. As a result, the range of input values for which rules are to be added anew becomes clear. This is useful when adding or revising rules.

It is permissible to adopt an arrangement in which only input values that prevail when the state in which the fuzzy inference engine 1 becomes incapable of reasoning continues for the prescribed number of times C are stored in the memory 4.

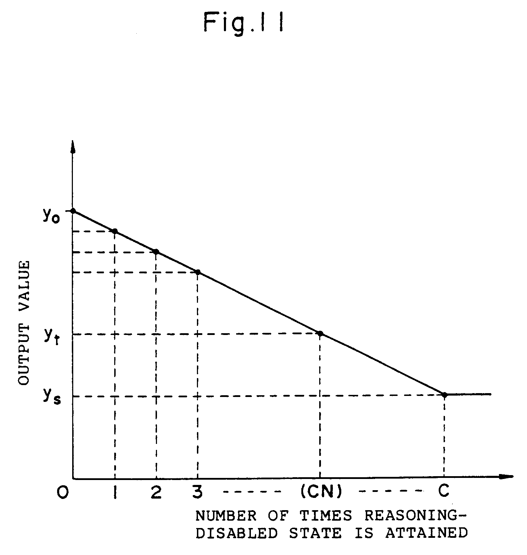

Fig. 11 illustrates yet another embodiment. In this embodiment, the configuration shown in Figs. 1 and 2 is applied as is. Further, the transient-state processing of steps 121, 122 in the flowchart of Fig. 4 is revised as follows:

Specifically, in the above-described embodiments, it is so arranged that the latest output value $y_0$ is outputted in the transient period lasting from the moment the reasoning-disabled state is attained in the fuzzy inference engine 1 to the moment this state has continued for the prescribed number of times C. In this embodiment, an output value $y_t$, which varies in step-like fashion from the latest output value $y_0$ to the specified output value $y_s$, is outputted in a transient period of this kind.

In Fig. 11, the horizontal axis indicates the number of times the reasoning-disabled state has been attained, and the vertical axis indicates the output values.

The output value $y_t$ that prevails when the number of times the reasoning-disabled state has been attained is (CN) is calculated in accordance with the following equation:

$$y_t = [(y_s-y_0) (CN)/C] + y_0 \qquad \text{Eq. 1}$$

If the count value (CN) in counter 3 has not reached the set count value C when the bit $b_1$ in the output data y is "1" (NO at step 118 in Fig. 4), the CPU 2 reads the latest output value $y_0$ out of the memory 4 and calculates the output value $y_t$ in accordance with Equation 1. The output value $y_t$ is outputted on the bus and the selector 6 is controlled so as to select the output value $y_t$ (to select $y_t$ instead of $y_0$ in Fig. 1). As a result, the value $y_t$ is applied to the controlled object in the above-described transition period.

In the above-described processing, a constant $(y_s-y_0)/C$ may be calculated in advance (e.g., when the latest output value $y_0$ is stored in the memory 4 or at the first occurrence of the reasoning-disabled state) and saved in the memory 4.

Thus, when the reasoning-disabled state in which fuzzy reasoning rules to which input values have been applied do not exist continues, an output value that varies from $y_0$ to $y_s$ in step-like fashion is outputted in the period of time from the latest output value $y_0$ for which the reasoning operation was possible to the preset specified output value $y_s$, and the specified output value $y_s$ is eventually attained. As a result, control of the controlled object is capable of proceeding smoothly. For example, in a case where input values no longer apply to rules in the fuzzy control of a motor rotating at high speed, the rotation of the motor is controlled so as to change from high speed to low speed in step-like fashion even though the specified output value $y_s$ specifies a low rotational speed. This makes it possible to prevent mechanical loss produced by sudden deceleration.

Industrial Applicability

The fuzzy reasoning apparatus and method of monitoring the operation thereof according to the present invention make it possible to compensate for instances in which fuzzy reasoning rules are incomplete in a fuzzy reasoning apparatus utilized for control of system or equipment in a wide field. The applications of this fuzzy reasoning are utilized in all fields.

**Claims**

1. A fuzzy reasoning apparatus having fuzzy reasoning means, to which a plurality of fuzzy reasoning rules in which propositions relating to input variables serve as an antecedent and a proposition relating to an output variable serves as a consequent is beforehand set, for repeatedly performing a fuzzy reasoning operation in which fuzzy reasoning is executed by applying given input values relating to the input variables to said fuzzy reasoning rules and an output value relating to an output variable obtained by this fuzzy reasoning is outputted, comprising:
   means for sensing that a given input value is outside a range covered by said plurality of fuzzy reasoning rules;
   successive-incidence counting means for counting the number of successive incidences in which the input value is sensed by said sensing means to be outside the range covered by the fuzzy reasoning rules;
   memory means for storing a specified output value set in advance; and
   selective output means for outputting the specified output value, which has been stored in said memory means, instead of the output value of said fuzzy reasoning means when the number counted by said successive-incidence counting means attains a predetermined prescribed count.

2. A fuzzy reasoning apparatus according to claim 1, further comprising means for entering said specified output value.

3. A fuzzy reasoning apparatus according to claim 1, further comprising:
   input means for entering said prescribed count; and
   memory means for storing the prescribed count entered.

4. A fuzzy reasoning apparatus according to claim 1, wherein said sensing means determines that an input value is outside the range covered by the fuzzy reasoning rules in a case where memberships of all antecedents of the plurality of fuzzy reasoning rules are zero.

5. A fuzzy reasoning apparatus according to claim 1, further comprising means for storing an immediately preceding output value obtained by said fuzzy reasoning means;

wherein when said sensing means has sensed that the given input value is outside the range, said selective output means selectively outputs the immediately preceding value, which has been stored in said storing means, until the number counted by said successive-incidence counting means attains said prescribed count.

6. A fuzzy reasoning apparatus according to claim 1, further comprising:

means for storing an immediately preceding output value obtained by said fuzzy reasoning means; and

means for calculating a transient output value, which makes a gradual transition from said immediately preceding output value to said specified output value, whenever said sensing means has sensed that the given input value is outside the range, said transient output value being calculated using a difference between said specified output value and the immediately preceding output value, which has been stored in said storing means, and the number counted by said successive-incidence counting means;

wherein when said sensing means has sensed that the given input value is outside the range, said selective output means selectively outputs said transient output value until the number counted by said successive-incidence counting means attains said prescribed count.

7. A fuzzy reasoning apparatus according to claim 1, further comprising means for alerting of the fact that the specified output value is being outputted when the number counted by said successive-incidence counting means has attained said prescribed count.

8. A fuzzy reasoning apparatus according to claim 1, further comprising means for storing an input value that prevails when said sensing means has sensed that the given input value is outside the range or when the number counted by said successive-incidence counting means has attained said prescribed count.

9. A method of monitoring operation of a fuzzy reasoning apparatus to which a plurality of fuzzy reasoning rules in which propositions relating to input variables serve as an antecedent and a proposition relating to an output variable serves as a consequent is beforehand set, wherein a fuzzy reasoning operation for performing fuzzy reasoning by applying given input values relating to the input variables to said fuzzy reasoning rules and for producing an output value relating to an output variable obtained by this fuzzy reasoning is repeatedly executed, said method comprising steps of:

determining, for every fuzzy reasoning operation, whether a reasoning-disabled state, in which antecedent membership is zero in all fuzzy reasoning rules, prevails when given input values are applied to the plurality of fuzzy reasoning rules;

counting the number of successive appearances of the reasoning-disabled state when this state is determined to exist; and

outputting a predetermined specified output value as the output of said fuzzy reasoning apparatus when the number of successive appearances of the reasoning-disabled state has attained a predetermined prescribed count.

10. A method of monitoring operation of a fuzzy reasoning apparatus according to claim 9, further comprising steps of:

storing an immediately preceding output value, which has been obtained from said fuzzy reasoning apparatus, in a memory beforehand; and

when the reasoning-disabled state has been determined to exist, selectively outputting the immediately preceding output value, which has been stored in said memory, until the number of successive appearances of the reasoning-disabled state has attained said prescribed count.

11. A method of monitoring operation of a fuzzy reasoning apparatus according to claim 9, further comprising steps of:

storing an immediately preceding output value, which has been obtained from said fuzzy reasoning apparatus, in a memory beforehand; and

when the reasoning-disabled state has been determined to exist, calculating a transient output value, which makes a gradual transition from said immediately preceding output value to said specified output value, in dependence upon the number of successive appearances of the reasoning-disabled state at this time, and selectively outputting said transient output value until said number of successive appearances of the reasoning-disabled state attains said prescribed count.

12. A method of monitoring operation of a fuzzy reasoning apparatus according to claim 9, further comprising a step of alerting of the fact that the specified output value is being outputted when said number of successive appearances of the reasoning-disabled state has attained said prescribed count.

**13.** A method of monitoring operation of a fuzzy reasoning apparatus according to claim 9, further comprising a step of storing an input value, which prevails when the reasoning-disabled state has been determined to exist or when said number of successive appearances of the reasoning-disabled state has attained said prescribed count, in a memory.

**14.** A method of monitoring operation of a fuzzy reasoning apparatus to which a plurality of fuzzy reasoning rules in which propositions relating to input variables serve as an antecedent and a proposition relating to an output variable serves as a consequent is beforehand set, wherein a fuzzy reasoning operation for performing fuzzy reasoning by applying given input values relating to the input variables to said fuzzy reasoning rules and for producing an output value relating to an output variable obtained by this fuzzy reasoning is repeatedly executed, said method comprising steps of:

determining, for every fuzzy reasoning operation, whether a reasoning-disabled state, in which antecedent membership is zero in all fuzzy reasoning rules, prevails when given input values are applied to the plurality of fuzzy reasoning rules;

counting the number of successive appearances of the reasoning-disabled state when this state is determined to exist; and

alerting of the fact that the number of successive appearances of the reasoning-disabled state has attained a predetermined prescribed count when this has occurred.

**15.** A method of monitoring operation of a fuzzy reasoning apparatus according to claim 14, further comprising a step of storing, in a memory, an input value that prevails when the reasoning-disabled state has been determined to exist or when said number of successive appearances of the reasoning-disabled state has attained said prescribed count.

## Fig.1

## Fig.2

| LATEST OUTPUT VALUE $y_0$ |
| SPECIFIED OUTPUT VALUE $y_s$ |
| SET COUNT VALUE C |

# Fig.3

```
            ┌─────────────┐
            │    START    │
            └─────────────┘
                  │
      ┌───────────────────────┐
 101──│  READ SELECTION       │
      │     OF FUNCTION        │
      └───────────────────────┘
                  │
 102          ╱───────╲
            ╱  FUNCTION  ╲──── N ───┐
            ╲  SELECTED?  ╱         │
              ╲─────────╱           │
                  │ Y               │
      ┌───────────────────────┐     │
 103──│  READ SPECIFIED        │     │
      │  OUTPUT VALUE Ys       │     │
      └───────────────────────┘     │
                  │                  │
      ┌───────────────────────┐     │
 104──│     STORE Ys           │     │
      │     IN MEMORY          │     │
      └───────────────────────┘     │
                  │                  │
      ┌───────────────────────┐     │
 105──│     READ SET           │     │
      │   COUNT VALUE C         │     │
      └───────────────────────┘     │
                  │                  │
      ┌───────────────────────┐     │
 106──│     STORE C            │     │
      │     IN MEMORY          │     │
      └───────────────────────┘     │
                  │◄─────────────────┘
            ┌─────────────┐
            │     END     │
            └─────────────┘
```

# Fig.4

START

CLEAR COUNTER — 111

ENTER $F_i$ — 112
N
Y

$b_1 = 1$ — 113
N
Y

N → STORE OUTPUT VALUE y AS $y_0$ — 114

CLEAR COUNTER — 115

SELECT AND DELIVER OUTPUT y — 116

$(CN) \leftarrow (CN) + 1$ — 117

$(CN) = C$ — 118
N
Y

READ OUT SPECIFIED OUTPUT VALUE $y_s$ — 119

READ OUT LATEST OUTPUT VALUE $y_0$ — 121

SELECT AND DELIVER SPECIFIED OUTPUT VALUE $y_s$ — 120

SELECT AND DELIVER LATEST OUTPUT VALUE $y_0$ — 122

EP 0 555 482 A1

## Fig.5

# Fig.6a

# Fig.6b

## Fig.7

$x_1$ → FUZZY INFERENCE ENGINE

$x_2$ →

$x_n$ →

1

$F_b$ $F_i$

6

SELECTOR

$y$

$y_0, y_s$

$b_1$

COUNTER 3

2

C P U

MEMORY 4

OUTPUT UNIT

INPUT UNIT 5

7

SELECT SIGNAL

## Fig.8

| |
|---|
| LATEST OUTPUT VALUE $y_0$ |
| SPECIFIED OUTPUT VALUE $y_s$ |
| SET COUNT VALUE $C$ |
| WARNING INDICATION DATA |

4

# Fig.9

# Fig. 10

| VARIABLE NUMBER OF TIMES | $x_1$ | $x_2$ | - - - - - - - - - - - - - | $x_n$ |
|---|---|---|---|---|
| FIRST | | | | |
| SECOND | | | | |
| THIRD | | | | |
| ⋮ | | | | |
| | | | | |

4

# Fig.11

OUTPUT VALUE

NUMBER OF TIMES REASONING-
DISABLED STATE IS ATTAINED

# INTERNATIONAL SEARCH REPORT

International Application No  PCT/JP91/01467

<table>
<tr><td colspan="2">I. CLASSIFICATION OF SUBJECT MATTER (if several classification symbols apply, indicate all) 6</td></tr>
<tr><td colspan="2">According to International Patent Classification (IPC) or to both National Classification and IPC</td></tr>
<tr><td colspan="2">Int. Cl$^5$  G06F9/44, G05B13/02</td></tr>
</table>

## II. FIELDS SEARCHED

Minimum Documentation Searched [7]

| Classification System | Classification Symbols |
|---|---|
| IPC | G06F9/44, G05B13/02, G05B9/02 |

Documentation Searched other than Minimum Documentation
to the Extent that such Documents are Included in the Fields Searched [8]

| | |
|---|---|
| Jitsuyo Shinan Koho | 1971 – 1990 |
| Kokai Jitsuyo Shinan Koho | 1971 – 1990 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| Y | JP, A, 02-138603 (Toshiba Corp.), May 28, 1990 (28. 05. 90), (Family: none) | 1-15 |
| Y | JP, A, 02-93903 (Omron Corp.), April 4, 1990 (04. 04. 90), (Family: none) | 1-15 |
| Y | JP, A, 02-165337 (Omron Corp.), June 26, 1990 (26. 06. 90), (Family: none) | 1-15 |
| Y | JP, U, 02-27202 (Meidensha Electric Mfg. Co., Ltd.), February 22, 1990 (22. 02. 90), (Family: none) | 1-15 |
| Y | JP, A, 52-57485 (Hitachi, Ltd.), May 11, 1977 (11. 05. 77), (Family: none) | 1-15 |
| Y | JP, A, 54-126880 (Hitachi, Ltd.), | 1-15 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| January 14, 1992 (14. 01. 92) | January 28, 1992 (28. 01. 92) |
| International Searching Authority | Signature of Authorized Officer |
| Japanese Patent Office | |

Form PCT/ISA/210 (second sheet) (January 1985)

**FURTHER INFORMATION CONTINUED FROM THE SECOND SHEET**

October 2, 1979 (02. 10. 79),
(Family: none)

---

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers . because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers . because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest

☐ No protest accompanied the payment of additional search fees

Form PCT/ISA/210 (supplemental sheet (2)) (January 1985)